# EUROPÄISCHE PATENTSCHRIFT

(11) **EP 0 991 586 B1**
(45) Veröffentlichungstag und Bekanntmachung des Hinweises auf die Patenterteilung: **21.05.2003**
(21) Anmeldenummer: 98920479.7
(22) Anmeldetag: 23.03.1998
(51) Int. Cl.: C01B 3/38

(54) **VORRICHTUNG ZUR REFORMIERUNG VON KOHLENWASSERSTOFFE ENTHALTENDEN EDUKTEN**
DEVICE FOR REFORMING EDUCTS CONTAINING HYDROCARBONS
DISPOSITIF POUR LE REFORMAGE D'EDUITS CONTENANT DES HYDROCARBURES

(30) Priorität: 23.05.1997 DE 19721630
(43) Veröffentlichungstag der Anmeldung: 12.04.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: VOGEL, Bernhard, D-79106 Freiburg (DE); SCHULER, Alexander, D-79098 Freiburg (DE); LEDJEFF-HEY, Konstantin, D-79379 Müllheim (DE)
(74) Vertreter: Pfenning, Meinig & Partner GbR
(86) Internationale Anmeldenummer: EP9801686
(87) Internationale Veröffentlichungsnummer: WO98052868

(56) Entgegenhaltungen:
- EP-A- 0 314 408
- EP-A- 0 360 505
- DE-A- 3 940 700
- FR-A- 2 374 946

## Beschreibung

Die Erfindung betrifft eine Vorrichtung zur Reformierung von Kohlenwasserstoffe enthaltenden Edukten nach dem Oberbegriff des Patentanspruches 1. Die erfindungsgemäße Vorrichtung kann insbesondere für die industrielle und auch für kleinere Anlagen zur Wasserstofferzeugung aus fossilen Energieträgern, wie Erdgas, Flüssiggas oder Naphta eingesetzt werden und arbeitet dabei nach dem sogenannten "Steam-Reforming-Verfahren". Die so erhaltenen wasserstoffreichen Synthesegase dienen beispielsweise nachfolgend zur Herstellung von Ammoniak, Alkohol oder zur Methanolsynthese, wobei ein wesentlicher Anwendungsfall die Erzeugung von hochreinem Wasserstoff ist, der auch in den verschiedensten Brennstoffzellen eingesetzt werden kann.

Die Erfindung eignet sich insbesondere zur Wasser-Stofferzeugung aus fossilen Energieträgern im kleinen Leistungsbereich, wie z.B. für Membranbrennstoffzellen-Systeme zur dezentralen stationären Stromerzeugung, wobei es dort insbesondere auf kompakte Einheiten und Baugrößen ankommt. In solchen Anwendungsfällen muß eine hohe Effizienz erreicht werden und insbesondere die bei kleineren Anlagen proportional ansteigenden Wärmeverluste Berücksichtigung finden. Dabei soll speziell die Wärmeabgabe der Brennereinheit unter Berücksichtigung der Wärmesenke, die durch den Reformierreaktor gebildet ist, berücksichtigt und effizient gehalten werden.

Derartige Verfahren sind beispielsweise aus M.Appl, H.Gössling, "Herstellung von Synthesegas nach dem Steam-Reforming-Verfahren", Chemiker-Zeitung Vol.96, No. 3, pp. 135-153, 1972 und I.Dybkjaer, "Tubular reforming and autothermal reforming of natural gas - an overview of available process", Fuel Processing Technology 42, pp. 85-107, 1995 bekannt.

Hierfür sind neben den bekannten großindustriellen Wasserstofferzeugungsanlagen im Zuge der fortschreitenden Brennstoffzellenforschung spezielle Reformiersysteme entwickelt worden, die auf dem sogenannten Wärmeaustauscherprinzip basieren. Mit solchen Anlagen kann Wasserstoff in einer Menge erzeugt werden, die einen Energiestrom von einigen 100 kW, bezogen auf den unteren Heizwert des Wasserstoffs erreicht. Der so erzeugte Wasserstoff kann dann in Hochtemperaturbrennstoffzellen, wie z.B. SOFC oder MCFC und auch in phosphorsauren Brennstoffzellen zur dezentralen Stromversorgung verwendet werden.

Dabei ist es bekannt, bei kleineren Systemen mit Polymermembran-Brennstoffzellen Methanol als Energieträger zu verwenden, wobei die Dampfreformierung von Methanol schon bei Temperaturen von 200 bis 300°C abläuft, da die Reformierungsreaktion von Methanol eine geringere Reaktionsenthalpie gegenüber der von Methan aufweist, das ebenfalls verwendet werden kann. Dieser relativ niedrige Temperaturbereich ermöglicht einen geringeren anlagentechnischen Aufwand und Wärmeverluste können wesentlich einfacher aufgefangen werden, als dies bei Ausgangsstoffen (Edukten), wie z.B. Erdgas, der Fall ist. Bei der Reformierung von Methanol können beispielsweise ein zusätzliches Fluid als Wärmeübertragungsmedium verwendet werden und die Energieverluste durch entsprechende Isolation verringert werden.

Die Reformierreaktion findet bei den bekannten Anlagen unter Verwendung von Feststoffkatalysatoren, wie z.B. Ni/Al₂O₃ statt. Die üblicherweise verwendeten Flammenbrenner liegen meist zentrisch in der Reformiereinheit oder ein solcher Brenner ist an die Reformiereinheit angeflanscht. Die bei der Verbrennung entstehenden Rauchgase werden dann in Spalten an den Reaktorwänden vorbeigeführt, so daß die für die Reaktion erforderliche Wärme konvektiv übertragen werden kann. Dabei müssen für gute Umsätze bei der Reformierung ausreichend große Übertragerflächen vorhanden sein.

Eine Vorwärmung des Eduktes bzw. der Edukte kann durch Gegen- oder Gleichstromführung von Eduktgas und Prozeßgas erreicht werden, um den hohen Enthalpiestrom des Prozeßgases teilweise ausnutzen zu können und die Heizleistung zu verringern.

Es ist aber nicht möglich, die bekannten Anlagen durch einfache Verkleinerung an kleine Systeme mit kleiner Leistung anzupassen. Hierbei treten insbesondere Probleme bei der Wärmeübertragung auf und relativ hohe Wärmeverluste bei kleiner ausgeführten Anlagen können, wenn überhaupt, nur mit relativ hohem Aufwand kompensiert werden.

Es ist daher Aufgabe der Erfindung, eine Vorrichtung vorzuschlagen, mit der im kleinen Leistungsbereich mit hoher Effizienz Kohlenwasserstoff enthaltende Edukte in Synthesegase umgesetzt werden können.

Erfindungsgemäß wird diese Aufgabe durch die Merkmale des Patentanspruches 1 gelöst. Vorteilhafte Ausgestaltungsformen und Weiterbildungen der Erfindung ergeben sich bei Nutzung der in den untergeordneten Ansprüchen genannten Merkmale.

Die erfindungsgemäße Vorrichtung kann für die Dampfreformierung von verschiedenen Kohlenwasserstoffe enthaltenden Edukten, aber auch bei anderen stark endothermen Prozessen ohne weiteres verwendet werden.

Die Vorteile der Erfindung liegen dabei insbesondere darin, daß kleine Leistungsbereiche unterhalb 50 kW abgedeckt werden können, ohne daß der Wirkungsgrad durch übertriebene Wärmeverluste verringert wird.

Die erfindungsgemäße Vorrichtung zeichnet sich dabei dadurch aus, daß ein verwendeter Strahlungsbrenner in Verbindung mit einem aus zwei Teilen bestehenden Reformierreaktor so angeordnet wird, daß die Teile des Reformierreaktors durch Strahlung und Konvektion beheizt werden können und dabei der Strahlungsbrenner die beiden Teile des Reformierreaktors ring- bzw. rohrförmig umschließt, wobei der Strahlungsbrenner auch aus flächigen ein Vieleck bildenden Elementen gebildet sein kann. Die Anordnung der einzelnen Elemente der erfindungsgemäßen Vorrichtung erfolgt dabei so, daß Edukt- und Rauchgas zwischen den beiden Reformierreaktorteilen im Gegenstrom geführt werden können.

Bevorzugt wird ein Teil des Reformierreaktors als Ringspaltreaktor und der andere Teil als Rohrreaktor ausgebildet und beide so zueinander angeordnet, daß der Ringspaltreaktor den Rohrreaktor rohrförmig umschließt und im Zwischenraum zwischen den beiden Teilen Rauchgas geführt werden kann, so daß die Wärme des Rauchgases für die Reformierung optimal ausgenutzt werden kann.

In einer weiteren Ausbildung der erfindungsgemäßen Vorrichtung, ist diese besonders günstig mit einem Wärmetauscher, der oberhalb des aus den beiden Teilen bestehenden Reformierreaktors angeordnet ist, weiter gebildet. In diesem Wärmetauscher kann dann die Wärme des Rauchgases auch dazu genutzt werden, das in den Reaktor eingeführte Edukt bzw. auch mehrere Edukte vorzuwärmen bzw. ein flüssiges Edukt zu verdampfen.

Diese thermische Kopplung führt insbesondere bei kleinen Leistungen, die mit einer erfindungsgemäßen Vorrichtung erzeugt werden sollen, dazu, daß die Wärmeverluste minimiert werden können.

In den Reaktionsräumen von Rohrreaktor und Ringspaltreaktor sind beschichtete Metallwabenkörper aufgenommen, mit deren Hilfe die Reformierreaktion katalytisch durchgeführt wird. Als Katalyten, mit denen die Metallwabenkörper beschichtet werden können, sind insbesondere Platin, Nickel aber auch Kupfer und Zink geeignet.

Der Ringspaltreaktor wird überwiegend durch die Wärmestrahlung des Strahlungsbrenners beheizt, wohingegen der Rohrreaktor über die Konvektion durch die an ihm vorbeigeführten Rauchgase erhitzt wird.

Die Gasführung des erzeugten Synthesegases erfolgt vorteilhaft im Gegenstrom zum Rauchgas, das aus dem Strahlungsbrenner kommt, d.h. die erste Einheit ist der konvektiv beheizte Rohrreaktor, die zweite Einheit ist der über Strahlung und Konvektion beheizte Ringspaltreaktor und der Austritt des Synthesegases erfolgt dann über den Wärmetauscher, der oberhalb der beiden Teile des Reformierungsreaktors angeordnet ist.

Der in der erfindungsgemäßen Vorrichtung verwendete Strahlungsbrenner kann bevorzugt aus keramischen Lochplatten aufgebaut sein, die so angeordnet sind, daß sie, wie bereits weiter oben angeführt, die Reformierreaktoren umschließen und die Zuführung des Brenngases zu dem Strahlungsbrenner über einen Ringraum erfolgt, der um die einzelnen Platten des Strahlungsbrenners mit einer Gehäusewandung gebildet wird und in dem das Brenngas in vorgemischter Form zugeführt werden kann. Außerdem kann ein Gasverteilerrohr mit einer über der gesamten Höhe des Strahlungsbrenners verteilten Lochstruktur für die Zufuhr von Brenngas verwendet werden, um eine gleichmäßige Zuführung von Brenngas zu erreichen.

Der bevorzugt direkt auf die beiden Teile des Reformierreaktors aufgesetzte Wärmetauscher besteht im wesentlichen aus einer Rohrwendel, durch die die für die Reformierung verwendeten Edukte in den Rohrreaktor gelangen können. Die Rohrwendel ist dabei mehrfach kreisförmig gewunden, so daß dem Edukt vor der Einführung in den Rohrreaktor eine ausreichend große Verweilzeit und eine entsprechend große Erwärmung zuteil werden kann.

Im Wärmetauscher können bevorzugt konzentrisch ausgebildete Rohre vorhanden sein, die eine Labyrinthstruktur ausbilden, durch die das Rauchgas geführt wird und dabei deren Restwärme für die Erwärmung bzw. Verdampfung des bzw. der Edukte(s) ausgenutzt werden kann. Rauchgas und Edukt werden dabei im Gegenstrom geführt. Der in der erfindungsgemäßen Vorrichtung verwendete Strahlungsbrenner kann zum einen durch Beeinflussung des Verhältnisses von Brenngas und Luft bzw. reinem Sauerstoff bzw. mit Sauerstoff angereicherter Luft beeinflußt werden. Eine andere Möglichkeit besteht darin, die für die Verbrennung genutzten Flächen der Wendel des Strahlungsbrenners zu variieren, in dem bestimmte Segmente, also einzelne Platten mit Brenngas versorgt werden oder nicht. Es kann aber auch die Verbrennung so beeinflußt werden, daß nur Teilbereiche von Segmenten bzw. Platten des Strahlungsbrenners mit Brenngas versorgt werden oder zumindest zwei Strahlungsbrenner übereinander angeordnet werden, die einzeln oder gemeinsam betrieben werden können. Die Verwendung eines zwei- bzw. mehrstufigen Strahlungsbrenners ist äquivalent möglich.

Dies führt dazu, daß ein Teillastbetrieb ohne weiteres bei gleichbleibenden spezifischen Strahlungsleistungen der betriebenen Teile des Strahlungsbrenners möglich ist. Dies wirkt sich ganz besonders vorteilhaft aus, wenn die erfindungsgemäße Vorrichtung in Verbindung mit Brennstoffzellen, die ein sehr gutes Teillastverhalten aufweisen, eingesetzt wird, so daß die Flexibilität der Vorrichtung insbesondere für diesen Einsatzfall ausgenutzt werden kann.

Bei der erfindungsgemäßen Vorrichtung ist es weiter ohne weiteres möglich, die verschiedenen erforderlichen Kapazitäten berücksichtigend, das Verhältnis der freien Querschnitte für die beiden Teile des Reformierungsreaktors und/oder die Höhe dieser beiden Teile des Reformierungsreaktors aufeinander abzustimmen. Dadurch kann die Gasgeschwindigkeit in den Wabenkanälen und demzufolge auch der Wärme- und Stofftransport innerhalb der beiden Teile des Reformierungsreaktors beeinflußt werden. Dadurch ist eine lokale Beeinflussung des Reaktionsumsatzes und der Temperaturen in den beiden Teilen des Reformierungsreaktors möglich.

Eine weitere Möglichkeit, auf die später noch zurückzukommen sein wird, besteht darin, Isolationen in den Teilen der Reformierungsreaktoren anzuordnen, um bestimmte Bereiche oder bestimme Einbauten thermisch zu entkoppeln, und so die Wärmeeinbringung zu unterstützen und lokal zu beeinflussen.

Das vorgemischte Brenngas, das an die bevorzugt als Lochplatten ausgebildete Wandung des Strahlungsbrenners in vorgemischter Form geführt wird, wird an der Innenfläche der Lochplatten gezündet und es entstehen direkt über den jeweiligen Löchern kleine Flammkegel. Hierdurch wird die Oberfläche stark erhitzt und kann soweit aufgeheizt werden, daß sie glüht. Die Oberfläche des Strahlungsbrenners wirkt dann als Abstrahlfläche gegenüber der Wärmesenke, die durch den Reformierreaktor gebildet wird. Da die Platten aus Keramik bestehen, sind die Temperaturen bei der Verbrennung ohne weiteres beherrschbar und es hat weiter den Vorteil, daß die Rückseite nur geringfügig Verlustwärme abstrahlt und ein Rückzünden in den umgebenden Gasspalt vermieden werden kann. Durch Beeinflussung des Verbrennungsgas-Luft- oder Sauerstoffverhältnisses können die Temperaturen im Gasspalt und auf der Brennerfläche, wie bereits erwähnt, beeinflußt werden. Dadurch ist es möglich, das Verhältnis der Strahlungswärmeabgabe und der Abgabe über Konvektion zu beeinflussen.

Der Strahlungsbrenner kann aber auch segmentiert betrieben werden, da der Strahlungsbrenner bevorzugt aus einzelnen Platten aufgebaut ist. Der Strahlungsbrenner kann so aufgebaut und betrieben werden, daß jede einzelne Platte oder selektiert Gruppen mehrerer Platten mit Brenngas versorgt und entsprechend beheizt werden, so daß im letzteren Fall auch im Teillastbereich, also Beheizung von einzelnen Platten, die gleichen Bedingungen (Leistungsdichte, Oberflächentemperaturen), optimal eingehalten werden können. Eine solche Möglichkeit besteht darin, lediglich die oberen Bereiche der Platten, die als Brennerfläche wirken, zu beheizen. Es können aber auch einzelne Platten abgeschaltet und so nicht beheizt werden, wobei sich hier insbesondere ein alternierender Wechsel zwischen beheizten und unbeheizten Platten ausgenutzt werden sollte.

Wird lediglich der obere Bereich der Brennerfläche, d.h. der Teil, der in Richtung auf den oberhalb der Reformierungsreaktoren angeordneten Wärmetauscher liegt, beheizt, ist die größte Wärmeabstrahlung in diesem Bereich und dies kann vorteilhaft für den Prozeß ausgenutzt werden.

Der Strahlungsbrenner kann unter Berücksichtigung der Beheizung des Ringspaltreaktors so betrieben werden, daß auf der Brenneroberfläche Temperaturen um ca. 1000 °C erreicht werden und dadurch die Stickoxidbildung auch im überstöchiometrischen Bereich stark reduziert werden kann. Dabei sind die erzielten Temperaturen jedoch ausreichend hoch, um Strahlungswärme auf den Ringspaltreaktor mit Temperaturen von ca. 800 °C zu übertragen.

Die Anordnung bzw. der Betrieb des Strahlungsbrenners direkt gegenüber der Endzone des Reformierreaktors wirkt sich günstig aus, da dort für maximalen Umsatz bei der Reformierung durch die sehr hohen Temperaturen gesorgt werden kann.

Der Energieinhalt aus der Verbrennung, der nach Auskopplung der Strahlungsleistung im Rauchgas verbleibt, wird dann konvektiv auf die beiden Teile des Reformierungsreaktors übertragen, wobei die Wärmeübertragung zuerst im unteren Bereich vom Ringspaltreaktor von außen und anschließend über den Gasspalt zwischen Ringspalt- und Rohrreaktor eintritt.

Durch die mit Katalysator beschichteten Waben der metallischen Wabenkörper in den beiden Teilen des Reformierreaktors erfolgt der innere Wärmetransport von der Wand an die Reaktionszonen der Wabenkanäle durch konvektiven Übergang auf das Gas und über Wärmestrahlung auf die nächste Kanalwand. Dadurch wird gegenüber den nach dem Stand der Technik verwendeten Schüttschicht-Reaktoren eine wesentlich bessere Strahlungswärmeübertragung erreicht. Die verwendeten Metallwaben ermöglichen sehr kleine radiale Temperaturgradienten und führen zu einem höheren Umsatz bei gleicher Wandtemperatur.

Die Abführung des Reforiniergases (Synthesegas) erfolgt im Gegenstrom zum beheizenden Rauchgas aus dem Strahlungsbrenner, so daß unnötig hohe Temperaturdifferenzen vermieden werden und die jeweiligen Wände der Teile des Reformierreaktors weniger thermisch belastet werden. Beim Übergang vom Rohrreaktor in den Ringspaltreaktor durch Rohrstutzen mit kleinerer Durchströmfläche erfolgt eine Durchmischung (Verwirbelung) der einzelnen Gasströme aus den radial verteilten Wabenkanälen. Mit dieser Durchmischung ist eine einheitliche Temperatur und ein homogenes Synthesegasgemisch bereits beim Eintritt in den Ringspaltreaktor gesichert.

Der, wie bereits beschrieben, ausgebildete Wärmetauscher sichert, daß die Rauchgase im Kreuzgegenstrom zu dem bzw. den Edukt(en) der Reformierung zugeführt werden. Dabei sinken die Temperaturen von innen nach außen und die Wärmeverluste können gering gehalten werden. So ist die Abwärme aus dem Rauchgas und aus der Reformierung optimal für die Aufheizung der bzw. des Edukte(s) nutzbar. Außerdem wird die sensible Wärme des Synthesegases nach der Reformierung teilweise durch Abstrahlung im Wärmeübertrager ausgenutzt.

Mit der erfindungsgemäßen Vorrichtung kann durch die Kombination eines schadstoffarmen Strahlungsbrenners mit einem Reformierreaktor oder gegebenenfalls bei einer endothermen Reaktion die Wärmeübertragung optimal durch die Kombination von Strahlung und Konvektion erfolgen.

Durch die zweiteilige Ausführung des Reformierreaktors und eine zugeordnete lokale Anordnung des Strahlungsbrenners kann das Verhältnis der Wärmestrahlung zur konvektiv übertragenen Wärme sehr variabel eingestellt werden. Dies führt weiter dazu, daß am Austritt des Reformierreaktors, wo ohnehin die höchsten Temperaturen erforderlich sind, beide Wärmeübertragungsformen gleichzeitig vorliegen.

Die zweiteilige Ausführung des Reformierreaktors ermöglicht, daß innere Parameter des Stoff- und Wärmetransportes (Verweilzeit, Gasgeschwindigkeit) eingestellt werden können.

Durch die Anordnung des Strahlungsbrenners in bezug auf den Reformierreaktor und dessen konkrete Ausbildung erfolgt die Wärmeabgabe vom Strahlungsbrenner von außen nach innen zu den Reaktionszonen und Wärmeverluste können vermieden werden, wobei gleichzeitig ein Vorheizen der Brenngase möglich ist.

Die Verwendung von Wabenkörpern, die mit dem Katalysator beschichtet sind, haben gegenüber den bekannten Feststoffkatalysatoren den Vorteil, daß eine geringere Masse erforderlich ist und günstigere dynamische Eigenschaften bei der Reformierung erreicht werden können. Bei Verwendung von Platin als Katalysator ist kein Reduzieren erforderlich, da es nach dem Beschichten bereits in aktive Form vorliegt und oxidierende Bedingungen keine Änderung hervorrufen können. Dadurch sind auch Mischverfahren, wie eine autotherme Reformierung möglich.

Die einzelnen Elemente, wie der Strahlungsbrenner, der zweiteilige Reformierreaktor und der entsprechend angeordnete und ausgebildete Wärmetauscher ermöglichen trotz kleiner absoluter Leistungen eine hohe Effizienz durch sehr hohe wärmetechnische Kopplung.

Nachfolgend soll die Erfindung anhand von Ausführungsbeispielen näher beschrieben werden.

Dabei zeigen:
- Figur 1: ein Ausführungsbeispiel einer erfindungsgemäßen Vorrichtung in einer Schnittdarstellung;
- Figur 2: den schematischen Aufbau in einer Schnittdarstellung als Draufsicht;
- Figur 3: den schematischen Aufbau einer Vorrichtung nach Figur 1;
- Figur 4: das in Figur 2 gezeigte Beispiel in einer Teillastbetriebsart;
- Figur 5: den schematischen Aufbau einer Vorrichtung mit zusätzlicher Isolation;
- Figur 6: den schematischen Aufbau einer Vorrichtung mit spezieller Ausführung des Rohrreaktors und
- Figur 7: den schematischen Aufbau einer Vorrichtung nach Figur 1 in einer anderen Betriebsart.

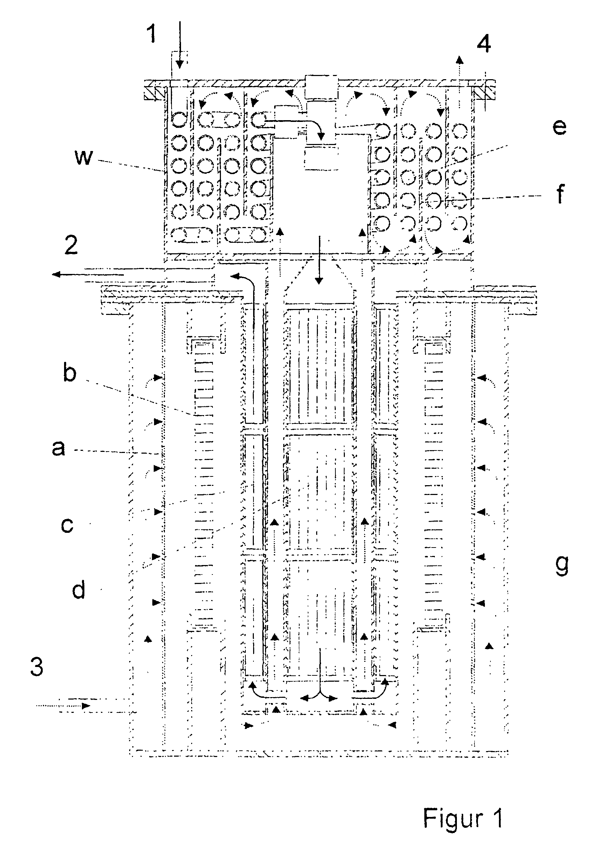

In der Figur 1 ist für ein Beispiel einer erfindungsgemäßen Vorrichtung in einer Schnittdarstellung, eine Möglichkeit für einen Aufbau, dargestellt. Dabei gelangen das bzw. mehrere Edukt(e) über eine Zuführung 1 in einen Wärmetauscher w und werden dort über Rohrwendeln e geführt, die von Rauchgas, das durch den Rauchgasaustritt 4 aus dem Wärmetauscher abgezogen wird, umströmt werden. Im Wärmetauscher w bilden konzentrische Rohre f eine Labyrinthstruktur aus, so daß während des Aufenthaltes von Rauchgas und Edukten eine relativ gute Wärmeübertragung und demzufolge Ausnutzung der Restwärme des Rauchgases erfolgen kann.

Die vorgewärmten und gegebenenfalls verdampften Edukte gelangen dann aus der Rohrwendel e in den Rohrreaktor d, der ein Teil des Reformierreaktors ist und werden dort durch katalysatorbeschichtete Metallwaben geführt. Nach Durchströmen des Rohrreaktors d gelangen die bereits zumindest teilweise reformierten Edukte in den zweiten Teil des Reformierreaktors, nämlich einen Ringspaltreaktor c, in dem die nahezu vollständige Reformierung der Edukte erfolgt und so ein ausreichend reines Synthesegas über den Austritt 2 abgezogen werden kann.

Die beiden Teile c und d des Reformierreaktors sind von einem Strahlungsbrenner b umschlossen. Der Strahlungsbrenner b kann beispielsweise aus einzelnen aneinandergefügten plattenförmigen Segmenten, die wiederum bevorzugt aus einem keramischen Material gebildet sind und als Lochplatten ausgebildet sind, bestehen.

Das Brenngas gelangt über zumindest eine Brenngaszuführung 3 über ein Gasverteilerrohr g zu den Lochplatten des Strahlungsbrenners b, wobei im Gasverteilerrohr g an der zu den Lochplatten des Strahlungsbrenners b gewandten Seite a eine gleichmäßige Lochstruktur ausgebildet ist, die sichert, daß eine gleichmäßige Brenngaszuführung an den Strahlungsbrenner b erfolgt und eine nahezu gleichmäßige Temperaturverteilung entlang der Brennflächen des Strahlungsbrenners b erreicht werden kann.

Das bei der Verbrennung entstehende Rauchgas wird über den Spalt, der zwischen dem Ringspaltreaktor c und dem Rohrreaktor d ausgebildet ist, in den Wärmetauscher w geführt und so gesichert, daß eine mehrfache Ausnutzung der Restwärme der Rauchgase erfolgen kann.

Die Erhitzung des zweiteiligen Reformierreaktors erfolgt dabei einmal über Strahlung und zum anderen über Strahlung und Konvektion. So wird der Ringspaltreaktor c durch Strahlung und Konvektion erhitzt und der Rohrreaktor d ausschließlich durch Konvektion beheizt, um in diesen beiden Teilen des Reformierreaktors die Reformierung der Edukte zu Synthesegas zu erreichen.

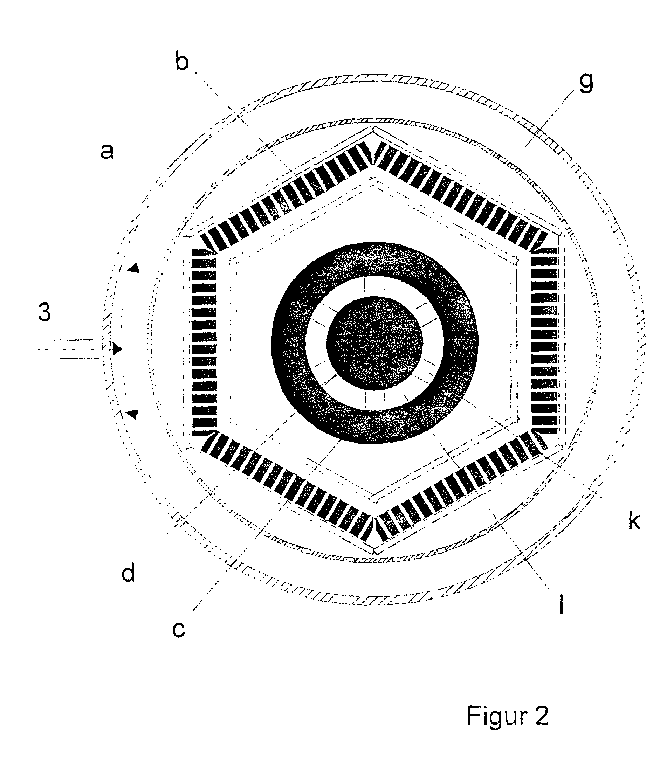

In der Figur 2 ist der Aufbau des Ausführungsbeispieles nach Figur 1 in einer geschnittenen Draufsicht erkennbar. Dabei wird das Brenngas wieder über die Brenngaszuführung 3 in das Gasverteilerrohr g durch die an deren Innenwand a ausgebildete Lochstruktur zum Strahlungsbrenner b, der aus Einzelplatten segmentartig aufgebaut ist, geführt. Bei diesem Beispiel bilden die Einzelplatten ein Sechseck, es kann aber auch eine andere eckige Form mit mehr oder weniger Einzelplatten gewählt werden. Dabei sollte aber ein geschlossenes den Reformierreaktor entlang seiner Längsrichtung allseitig umschließendes Gebilde ausgebildet sein muß, so daß die Mantelflächen des Reformierreaktors allseitig abgeschirmt werden.

Im Inneren des Strahlungsbrenners b sind dann die beiden Teile des Reformierreaktors c und d angeordnet. Der Ringspaltreaktor c und der Rohrreaktor d werden mittels Rohrstutzen k beabstandet gehalten und es wird ein Raum 1 zwischen diesen beiden Teilen des Reformierreaktors ausgebildet, durch den das Rauchgas in den Wärmetauscher w gelangen kann.

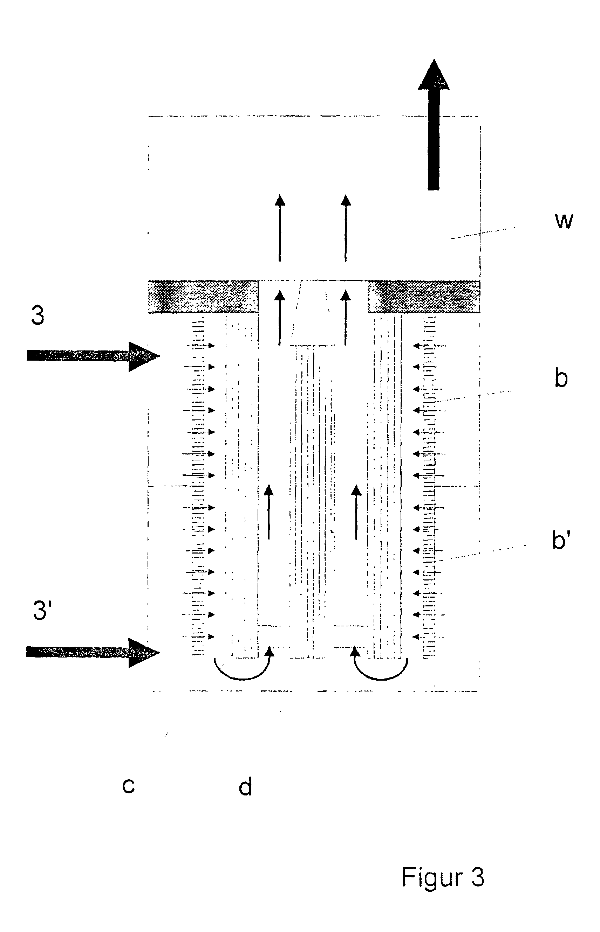

In der Figur 3 ist ein Beispiel einer erfindungsgemäßen Vorrichtung mit einem zweiteiligen Strahlungsbrenner b, b', der im Vollastbetrieb arbeitet, dargestellt. Über zwei getrennte Brenngaszuführungen 3 und 3' gelangt Brenngas zu den beiden Strahlungsbrennern b und b' und beide werden beheizt, so daß der Ringspaltreaktor c und der Rohrreaktor d maximal erwärmt werden können.

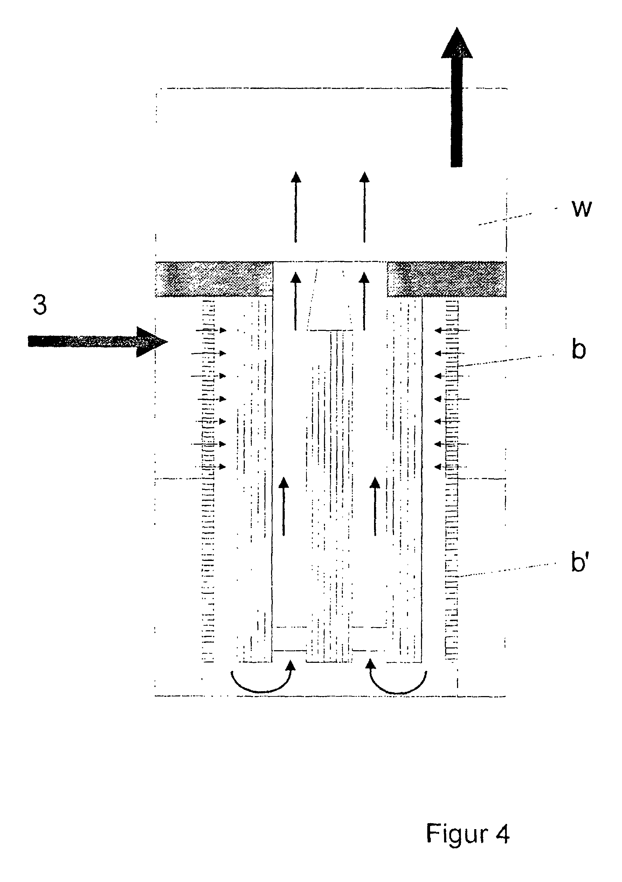

Im Gegensatz dazu, wird bei dem in der Figur 4 gezeigten Beispiel der Strahlungsbrenner b' abgeschaltet und von der Brenngaszuführung 3' getrennt, so daß lediglich der Strahlungsbrenner b betrieben wird und so die erfindungsgemäße Vorrichtung im Teillastbetrieb arbeiten kann.

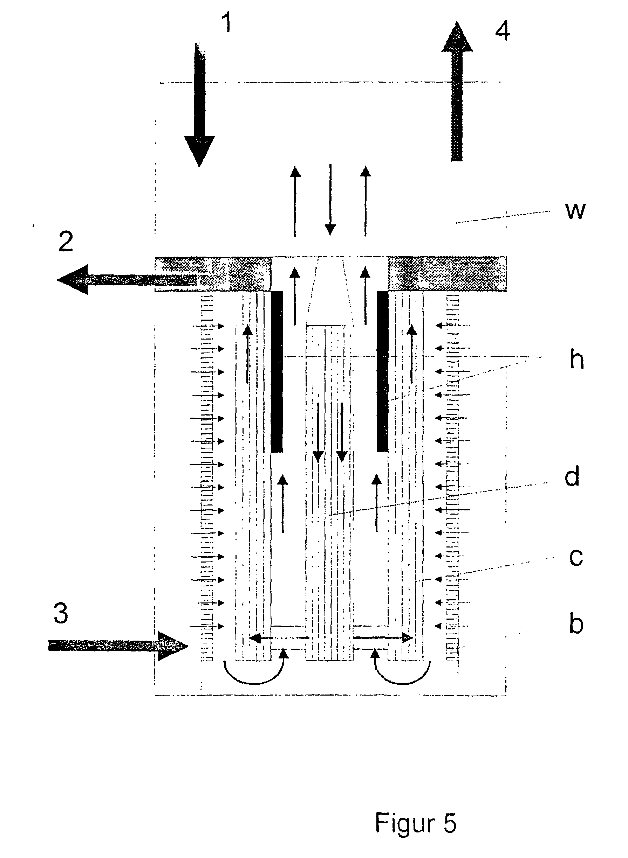

In der Figur 5 ist ein anderes Beispiel einer erfindungsgemäßen Vorrichtung dargestellt, bei dem wiederum nur ein Strahlungsbrenner b verwendet wird. Hierbei ist im Spalt zwischen dem Ringspaltreaktor c und dem Rohrreaktor d, durch den das Rauchgas in den Wärmetauscher w geführt wird, im Bereich des Austrittes des Rauchgases zum Wärmetauscher w eine Isolation h angeordnet. Dadurch wird die obere, innere Mantelfläche des Ringspaltreaktors c thermisch isoliert. Dies bewirkt eine noch höhere Endtemperatur der Reformierung und eine geringere Abstrahlung in die Anfangszone des ersten Teiles des Reformierreaktors, also im Rohrreaktor d, wo erfahrungsgemäß ein großer Teil der Umsetzung stattfindet, also ein hoher Reaktionswärmestrom benötigt wird.

Durch die Isolation h sinkt die Temperatur im Eintrittsbereich des Rohrreaktors d und der Reaktionsumsatz an dieser Stelle verringert sich. Die Umsetzung bei der Reformierung wird dadurch entsprechend in nachfolgende Zonen des Reaktors verschoben, die bei höheren Temperaturen gehalten werden. Dies wirkt sich vorteilhaft dadurch aus, daß die Katalysatorbelastung insgesamt vergleichmäßigt wird und so die Lebensdauer des Reformierreaktors verlängert und dessen Wirkungsgrad länger in höheren Bereichen gehalten werden kann.

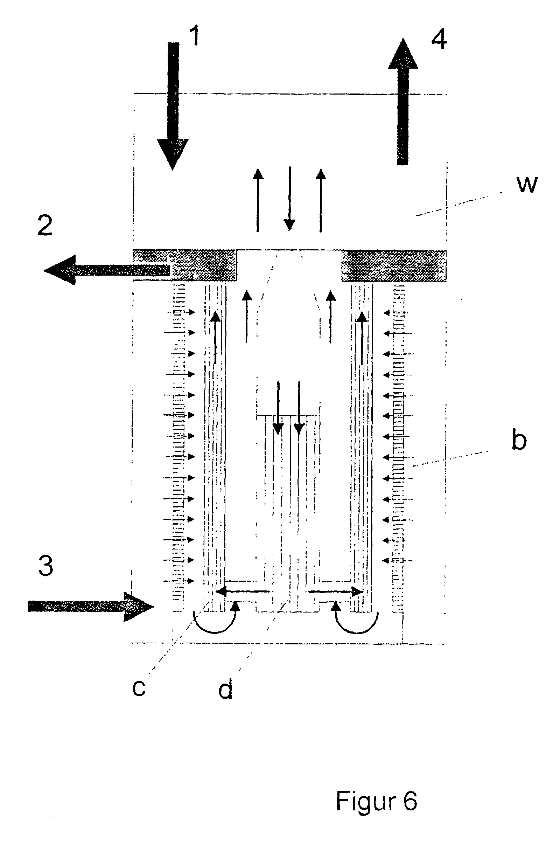

In der Figur 6 ist ein weiteres Beispiel schematisch dargestellt, bei dem der obere Teil des Rohrreaktors d als Leerrohr ausgebildet ist oder sich im oberen Teil kein Katalysator befindet. Dadurch verringert sich die effektive Höhe dieses Teiles des Reformierreaktors gegenüber dem den zweiten Teil des Reformierreaktors bildenden Ringspaltreaktor c. Dadurch findet in diesem Bereich keine Reaktion statt und es wird nur geringfügig Wärme aufgenommen. Der Ort, an dem der größte Wärmebedarf erforderlich ist, also der Eintritt in die erste Katalysatorwabe des Rohrreaktors d, ist räumlich getrennt vom Austritt des Ringspaltreaktors c zur Synthesegasabführung 2, wo möglichst hohe Temperaturen die vollständige Umsetzung der Kohlenwasserstoffe zu Synthesegas gewährleisten sollen.

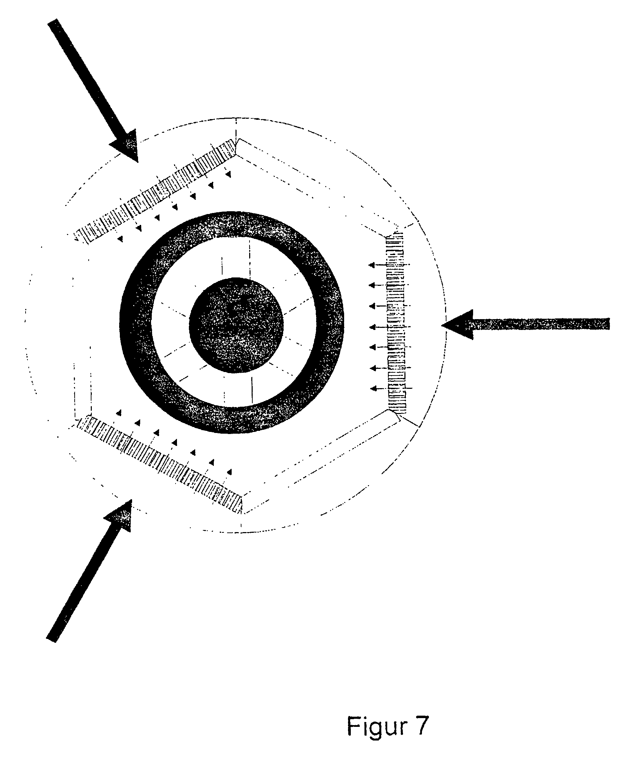

In der Figur 7 ist eine weitere Möglichkeit gezeigt, wie der Strahlungsbrenner b im Teillastbetrieb betrieben werden kann. Hier werden nur einige Einzelplatten des Strahlungsbrenners b mit Brenngas versorgt und andere Einzelplatten sind abgeschaltet. Für eine gleichmäßige Wärmeerzeugung ist es günstig, die ein- bzw. abgeschalteten Einzelplatten des Strahlungsbrenners b alternierend zu wechseln.

## Patentansprüche

1. Vorrichtung zur Reformierung von Kohlenwasserstoffe enthaltenden Edukten mit einem Strahlungsbrenner und einem Reformierreaktor, der zumindest teilweise Metallwabenkörper mit einer Katalysatorbeschichtung enthält,
**dadurch gekennzeichnet, daß** der Strahlungsbrenner (b) den aus zwei Teilen bestehenden Reformierreaktor (c, d), den Reformierreaktor (c, d) durch Strahlung und Konvektion beheizend, umschließt und Edukt- und Rauchgas zwischen den beiden Reformierreaktorteilen (c) und (d) im Gegenstrom geführt sind.

2. Vorrichtung nach Anspruch 1,
**dadurch gekennzeichnet, daß** ein Teil (c) des Reformierreaktors als Ringspaltreaktor und der andere Teil (d) als Rohrreaktor ausgebildet ist.

3. Vorrichtung nach Anspruch 1 oder 2,
**dadurch gekennzeichnet, daß** der Ringspaltreaktor (c) den Rohrreaktor (d) rohrförmig umschließt und zwischen beiden Rauchgas führbar ist.

4. Vorrichtung nach einem der Ansprüche 1 bis 3,
**dadurch gekennzeichnet, daß** oberhalb des Reformierreaktors (c, d) ein Wärmetauscher (w) angeordnet ist, durch den das/die Edukt(e) einführbar und Rauchgas abführbar sind.

5. Vorrichtung nach einem der Ansprüche 1 bis 4,
**dadurch gekennzeichnet, daß** der Wärmetauscher (w) eine Rohrwendel (e) zur Edukteinfuhr aufweist und das Rauchgas durch konzentrische Rohre (f), eine Labyrinthstruktur vorgebend, die Rohrwendel (e) überstreichend zu einem Rauchgasaustritt (4) geführt ist.

6. Vorrichtung nach einem der Ansprüche 1 bis 5,
**dadurch gekennzeichnet, daß** der Strahlungsbrenner (b) aus keramischen Lochplatten besteht.

7. Vorrichtung nach einem der Ansprüche 1 bis 6,
**dadurch gekennzeichnet, daß** ein Gasverteilerrohr (g) mit einer über die Höhe des Strahlungsbrenners (b) verteilten Lochstruktur vorhanden ist, durch die Brenngas von einer Brenngaszuführung (3) gleichmäßig an den Strahlungsbrenner (b) führbar ist.

8. Vorrichtung nach einem der Ansprüche 1 bis 7,
**dadurch gekennzeichnet, daß** der Strahlungsbrenner (b) in mehrere Segmente unterteilt ist.

9. Vorrichtung nach einem der Ansprüche 1 bis 8,
**dadurch gekennzeichnet, daß** der Strahlungsbrenner (b) aus mehreren Einzelplatten segmentartig aufgebaut ist.

10. Vorrichtung nach einem der Ansprüche 1 bis 9,
**dadurch gekennzeichnet, daß** mindestens zwei Strahlungsbrenner (b, b') übereinander angeordnet sind.

11. Vorrichtung nach einem der Ansprüche 1 bis 10,
**dadurch gekennzeichnet, daß** im oberen Bereich zwischen Ringspaltreaktor (c) und Rohrreaktor (d) eine Isolation (h) angeordnet ist.

12. Vorrichtung nach einem der Ansprüche 1 bis 11,
**dadurch gekennzeichnet, daß** der Eintrittsbereich für das/die Edukt(e) des Rohrreaktors (d) als Leerrohr ausgebildet ist oder keine Katalysatorbeschichtung aufweist.

## Claims

1. A device for reforming educts containing hydrocarbons, having a radiant burner and a reforming reactor which contains at least in part metallic bodies of honeycomb structure with a coating of a catalyst, **characterized in that** the radiant burner (**b**) surrounds the reforming reactor (**c, d**) comprising two parts, whilst heating the reforming reactor (**c, d**) by radiation and convection, and educt gas and flue gas are conveyed in counterflow between the two parts (**c**) and (**d**) of the reforming reactor.

2. A device according to Claim 1, **characterized in that** one part (**c**) of the reforming reactor is constructed in the form of an annular-gap reactor and the other part (**d**) is constructed in the form of a tubular reactor.

3. A device according to Claim 1 or 2, **characterized in that** the annular-gap reactor (**c**) surrounds the tubular reactor (**d**) in the manner of a tube, and flue gas can be conveyed between the two.

4. A device according to one of Claims 1 to 3, **characterized in that** a heat exchanger (**w**), through which the educt or educts can be introduced and flue gas can be removed, is arranged above the reforming reactor (**c, d**).

5. A device according to one of Claims 1 to 4, **characterized in that** the heat exchanger (**w**) has a tube helix (**e**) for the introduction of the educts, and the flue gas is conveyed to a flue-gas outlet (4), passing over the tube helix (**e**) to a flue-gas outlet (4) through concentric tubes (**f**) producing a labyrinth structure.

6. A device according to one of Claims 1 to 5, **characterized in that** the radiant burner (**b**) consists of perforated ceramic plates.

7. A device according to one of Claims 1 to 6, **characterized in that** a gas-distributor tube (**g**) with a perforation structure distributed over the height of the radiant burner (**b**) is provided, through which perforation structure combustion gas can be conveyed from a combustion-gas supply (3) in a uniform manner to the radiant burner (**b**).

8. A device according to one of Claims 1 to 7, **characterized in that** the radiant burner (**b**) is subdivided into a plurality of segments.

9. A device according to one of Claims 1 to 8, **characterized in that** the radiant burner (**b**) is formed in the manner of segments from a plurality of individual plates.

10. A device according to one of Claims 1 to 9, **characterized in that** at least two radiant burners (**b, b'**) are arranged one above the other.

11. A device according to one of Claims 1 to 10, **characterized in that** an insulation (**h**) is arranged in the upper region between the annular-gap reactor (**c**) and the tubular reactor (**d**).

12. A device according to one of Claims 1 to 11, **characterized in that** the inlet region for the educt or educts of the tubular reactor (**d**) is constructed in the form of an empty tube or has no coating of a catalyst.

## Revendications

1. Dispositif pour le reformage d'éduits contenant des hydrocarbures comprenant un brûleur radiant et un réacteur de reformage, qui contient au moins en partie des corps métalliques en nid d'abeilles avec un revêtement catalytique,
**caractérisé en ce que** le brûleur radiant (b) entoure le réacteur de reformage (c, d) constitué de deux parties, pour chauffer le réacteur de reformage (c, d) par rayonnement et convection, et les éduits et gaz brûlés sont guidés à contre-courant entre les deux parties (c) et (d) du réacteur de reformage.

2. Dispositif selon la revendication 1,
**caractérisé en ce qu'**une partie (c) du réacteur de reformage se présente sous la forme d'un réacteur à interstice annulaire et l'autre partie (d) sous la forme d'un réacteur tubulaire.

3. Dispositif selon la revendication 1 ou 2,
**caractérisé en ce que** le réacteur à interstice annulaire (c) entoure le réacteur tubulaire (d) en forme de tube et les gaz brûlés sont acheminés entre les deux pièces.

4. Dispositif selon l'une quelconque des revendications 1 à 3, **caractérisé en ce qu'**au-dessus du réacteur de reformage (c, d) est installé un échangeur de chaleur (w) à travers lequel le ou les éduits peuvent être introduits et les gaz brûlés évacués.

5. Dispositif selon l'une quelconque des revendications 1 à 4, **caractérisé en ce que** l'échangeur de chaleur (w) présente une hélice tubulaire (e) pour l'introduction de l'éduit et les gaz brûlés sont guidés à travers des tubes concentriques (f), prédéfinissant une structure labyrinthique, balayant l'hélice tubulaire vers une sortie de gaz brûlés.

6. Dispositif selon l'une quelconque des revendications 1 à 5,
**caractérisé en ce que** le brûleur radiant (b) est constitué de plaques perforées céramiques.

7. Dispositif selon l'une quelconque des revendications 1 à 6,
**caractérisé en ce qu'**il est prévu un tube distributeur de gaz (g) avec une structure perforée distribuée sur la hauteur du brûleur radiant (b), par laquelle le gaz de combustion peut être acheminé d'une alimentation en gaz de combustion (3) au brûleur radiant (b) de manière uniforme.

8. Dispositif selon l'une quelconque des revendications 1 à 7,
**caractérisé en ce que** le brûleur radiant (b) est divisé en plusieurs segments.

9. Dispositif selon l'une quelconque des revendications 1 à 8,
**caractérisé en ce que** le brûleur radiant (b) est formé de plusieurs plaques individuelles de manière segmentée.

10. Dispositif selon l'une quelconque des revendications 1 à 9,
**caractérisé en ce qu'**au moins deux brûleurs radiants (b, b') sont agencés l'un au-dessus de l'autre.

11. Dispositif selon l'une quelconque des revendications 1 à 10,
**caractérisé en ce qu'**un dispositif isolant (h) est agencé dans la zone supérieure entre le réacteur à interstice annulaire (c) et le réacteur tubulaire (d).

12. Dispositif selon l'une quelconque des revendications 1 à 11,
**caractérisé en ce que** la zone d'entrée pour le ou les éduits du réacteur tubulaire (d) se présente sous la forme d'un tube vide ou ne présente pas de revêtement catalytique.
